# EUROPEAN PATENT SPECIFICATION

(11) **EP 0 566 031 B1**
(45) Date of publication and mention of the grant of the patent: **16.07.1997**
(21) Application number: 93105828.3
(22) Date of filing: 08.04.1993
(51) Int. Cl.: B21D 39/00, B21J 15/02, B21J 15/08

(54) **An electrically heatable caulking method**
Elektrisch heizbares Dichtverfahren
Procédé de calfatage à l'aide de chauffage électrique

(30) Priority: 10.04.1992 JP 90792/92
(43) Date of publication of application: 20.10.1993
(73) Proprietor: Nippon Light Metal Co., Ltd., Minato-ku Tokyo-to, 108 (JP)
(72) Inventor: Matsumoto, Jiro, c/o NIKKEI TECHNO-RES., Co., Ltd., Ihara-gun, Shizuoka (JP); Yanagisawa, Ikuo, c/o NIPPON LIGHT METAL Co., Ltd., Tokyo (JP)
(74) Representative: Hansen, Bernd, Dr. Dipl.-Chem.

(56) References cited:
- DE-A- 2 710 657
- PATENT ABSTRACTS OF JAPAN, unexamined applications, field M, vol. 9, no. 87, April 17, 1985, THE PATENT OFFICE JAPANESE GOVERNMENT page 73 M 372
- PATENT ABSTRACTS OF JAPAN, unexamined applications, field M, vol. 10, no. 372, December 11, 1986, THE PATENT OFFICE JAPANESE GOVERNMENT page 108 M 544
- SOVIET INVENTIONS ILLUSTRATED, section EL, week C47, January 7, 1981, Derwent Publications Ltd., London, X 25
- SOVIET PATENT ABSTRACTS, section S-X, week 9129, September 4, 1991, Derwent Publications Ltd., London, X25

## Description

### BACKGROUND OF THE INVENTION

### 1. Field of the Invention

This invention relates to an electrically heatable caulking method and, more particularly, to an electrically heatable caulking method adapted for caulking a work made of magnesium or any suitable magnesium alloy and having one or more caulking pins.

### 2. Description of the Related Art

For instance, a light weight aluminum alloy or a steel plate has been conventionally and widely used as structural members of a vehicle, such as a cylinder head cover or a buffer plate. When these members are secured to another member, a so-called electrically heatable caulking method is widely used as mentioned below. First, caulking pins provided on one of the members are inserted into corresponding caulking pin holes formed in the other member. These two members are thus superimposed together and placed between two opposing electrodes, by which an alternative electric current is supplied between these two members and, in addition, a pressure force is also exerted therebetween.

Also, recently, research has been conducted so as to discover a method using a magnesium or a magnesium alloy, having a specific gravity smaller than that of the above-mentioned aluminum alloy, in place of the latter.

In an application of structural members of a vehicle, it is possible to use a magnesium alloy as the material of a cylinder head cover. However, in the prior art, it has been conventionally considered that, apart from a light weight aluminum alloy, it is technically difficult to use a magnesium alloy in an electrically heatable caulking method for attaching a cylinder head cover made of a magnesium alloy to a buffer plate, because a plastic working of magnesium alloy is more difficult than that of an aluminum alloy and, therefore, according to a conventional caulking method, it is difficult to work the magnesium alloy to a desired shape.

### SUMMARY OF THE INVENTION

Under the above circumstances, according to the inventor's research, it has been found that, if the electrodes are made of a specified material and if the welding conditions, such as current ampere for welding, welding time, pressure or the like, are suitably selected, it will be possible to use a magnesium or magnesium alloy to obtain a favorable caulking.

An object of the present invention is to provide an electrical caulking method that can use a magnesium or magnesium alloy.

According to the present invention there is provided an electrical caulking method of a work that is made of magnesium or a magnesium alloy and comprises a body and a caulking pin integrally projected from said body, said method comprising:
- a step of holding said work between opposing first and second electrodes in such a manner that said first electrode contacts said caulking pin and said second electrode contacts said body,
- a step of supplying an electric current between said first and second electrodes and
- a step of exerting a pressure therebetween so as to caulk said caulking pin into a desired shape;
characterized in that at least said first electrode that contacts said caulking pin of said work is made of tungsten.

The above method may further comprise a second work that is to be attached together with said first work; said method comprising: a step of placing said first and second members together in such a manner that said caulking pin is inserted into said caulking pin inserting hole.

Tungsten, has a low thermal diffusivity and is difficult alloying with magnesium which is advantageous.

It is also advantageous for an alternate electric current to be supplied between said first and second electrodes.

It is still advantageous for an electric current density to be 100-160 A/mm².

It is further advantageous for a pressure of 127-216 N/mm² (13-22 Kgf/mm²) to be exerted between said first and second electrodes.

It is still further advantageous for said second electrode, which contacts said body of the work to be made of a Cr-Cu alloy.

In the present invention, the caulking pin of the work made of magnesium or a magnesium alloy can be appropriately plastically deformed and a good caulking effect can be obtained.

### BRIEF DESCRIPTION OF THE DRAWINGS

Figure 1 is a cross-sectional view for illustrating an electrically heatable caulking method according to the present invention (before caulking);
Figure 2 is a cross-sectional view similar to Fig. 1, but illustrating the state after caulking.

### DESCRIPTION OF THE PREFERRED EMBODIMENTS

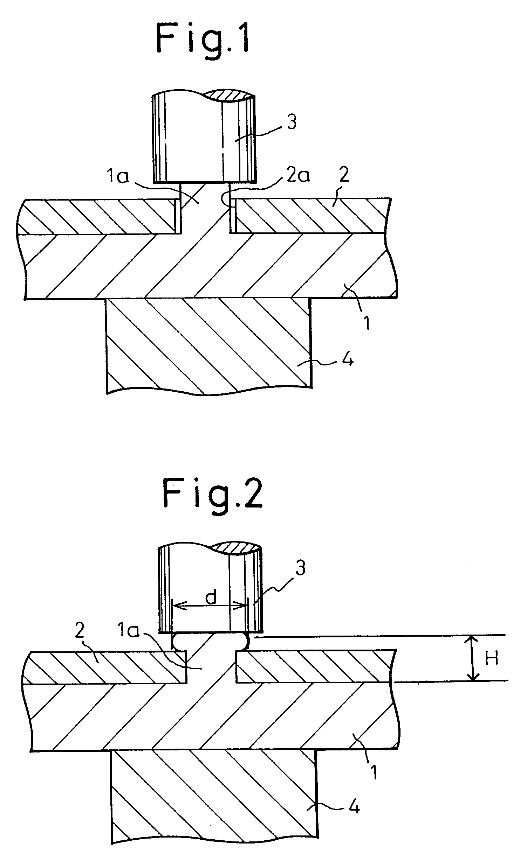

Referring now to the drawings, wherein Figs. 1 and 2 illustrate an electrically heatable caulking method according to the present invention.

The work 1 is a member made of a magnesium alloy and comprises a plate-like body having a thickness of 6.0 mm. The body 1 is provided integrally at a predetermined position or positions with one or more caulking pins 1a projected from the body 1. The caulking pins 1a have a diameter of 6.9 mm and a height of 5.5 mm.

Another work 2, which is to be attached to the work 1 by a caulking process according to the present invention, is a plate made of the same material as the member 1, i.e., a magnesium alloy. Otherwise, the plate 2 may be made of another material. The plate 2 is provided at a corresponding position or positions for the caulking pin 1a with one or more caulking pin inserting holes 2a, with a diameter of 7.9 mm.

When attaching the plate 2 together with the member 1, as shown in Fig. 1, the plate 2 is first placed on the member 1 in such a manner that the caulking pins 1a are fit into the caulking pin inserting holes 2a. These members 1 and 2 are then held between opposing electrodes 3 and 4 in such a manner that the upper electrode 3 contacts the upper end of the caulking pin 1a and the lower electrode 4 contacts the member 1 at a corresponding position, respectively.

At least one of the electrodes 3 and 4, i.e., the upper electrode 3 that contacts the caulking pin 1a of the member 1 of a magnesium alloy is made of tungsten with a diameter of 20.0 mm in this embodiment, because tungsten is a typical material having high melting point and hardness, low thermal diffusivity and difficulty alloying with magnesium.

In this embodiment, the other electrode, i.e., the lower electrode 4 is made of Cr-Cu alloy (content of Cr: 1.0%) and has an outer diameter of 50.0 mm.

When alternate electric power and pressure are exerted simultaneously between the opposing upper and lower electrodes 3 and 4, the caulking pin or projection 1a is deformed so as to close the caulking pin inserting hole 2a, as shown in Fig. 2.

It has been found that a most favorable caulking result can be obtained if the caulking operation is conducted under any selected conditions within the following current and pressure ranges. Consequently, the force exerted between said upper and lower electrodes 3 and 4 is 3470-7920 N (350-800 Kgf), the current ampere is 3,000-8,000 A, and the electric power supply time is 0.2-1.6 sec.

The following Tables 1 and 2 show the experimental results of the above-mentioned caulking operation. The evaluation conditions are as follows: With respect to the initial condition before deformation by caulking, the caulking pin 1a has a diameter of 6.9 mm and a height of 5.5 mm; ⓞ indicates "good" samples, i.e., if the caulking pin 1a, after being deformed by the caulking process, has an outer diameter d, more than 9.8 mm, at a deformed head portion thereof, and a height H of not more than 3.0 mm, and there are no excess slits or crushes; ○ indicates "agreeable in practical use", if the caulking pin 1a, after being deformed by the caulking process, has an outer diameter d of more than 9.0 mm, at a deformed head portion thereof, and a height H of not more than 3.5 mm, and there are less slits or crushes; △ indicates "little difficultly in practical use", if the caulking pin 1a, after being deformed by the caulking process has an outer diameter d of less than 9.0 mm, at a deformed head portion thereof, and a height H of more than 3.5 mm; and X indicates "not agreeable in practical use", if the sample has slits or crushes and it is difficult to use.

**TABLE 1**

| Force (N) | Ampere of Current (A) | Time of Current Supply (sec) | | | | |
|---|---|---|---|---|---|---|
| | | 0.2 | 0.4 | 0.8 | 1.2 | 1.6 |
| 3470 (350 Kgf) | 3,000 | | | | X d: 7.1 | |
| | | | | | H: 5.2 | |
| | 4,000 | | X d: 7.0 | X d: 8.0 | | |
| | | | H: 5.2 | H: 4.3 | | |
| | 5,000 | | △ d: 9.0 | | | |
| | | | H: 3.7 | | | |
| | | | *1 | | | |
| 4900 (500 Kgf) | 4,000 | | X d: 7.5 | △ d: 8.3 | ○ d: 9.0 | |
| | | | H: 4.7 | H: 3.9 | H: 3.5 | |
| | 5,000 | | ○ d: 9.1 | ⓞ d: 9.8 | ⓞ d:10.1 | ⓞ d:10.3 |
| | | | H: 3.5 | H: 2.9 | H: 2.8 | H: 2.4 |
| | 6,000 | X d: 7.8 | △ d:10.0 | △ d:10.6 | | |
| | | H: 4.4 | H: 2.5 | H: 2.2 | | |
| | | | *1 | *1 | | |
| | 7,000 | X d:10.3 | | | | |
| | | H: 2.6 | | | | |
| 5880 (600 Kgf) | 4,000 | | | ○ d: 9.0 | ⓞ d: 9.9 | |
| | | | | H: 3.5 | H: 2.7 | |
| | 5,000 | | ○ d: 9.5 | ⓞ d:10.2 | ⓞ d:10.7 | |
| | | | H: 3.1 | H: 2.5 | H: 2.3 | |
| | 6,000 | △ d: 8.4 | ⓞ d:10.1 | ⓞ d:11.0 | ⓞ d:11.0 | |
| | | H: 4.0 | H: 2.5 | H: 2.2 | H: 2.2 | |

| | | | | | | |
|---|---|---|---|---|---|---|
| *1: Small slits exist | | | | | | |

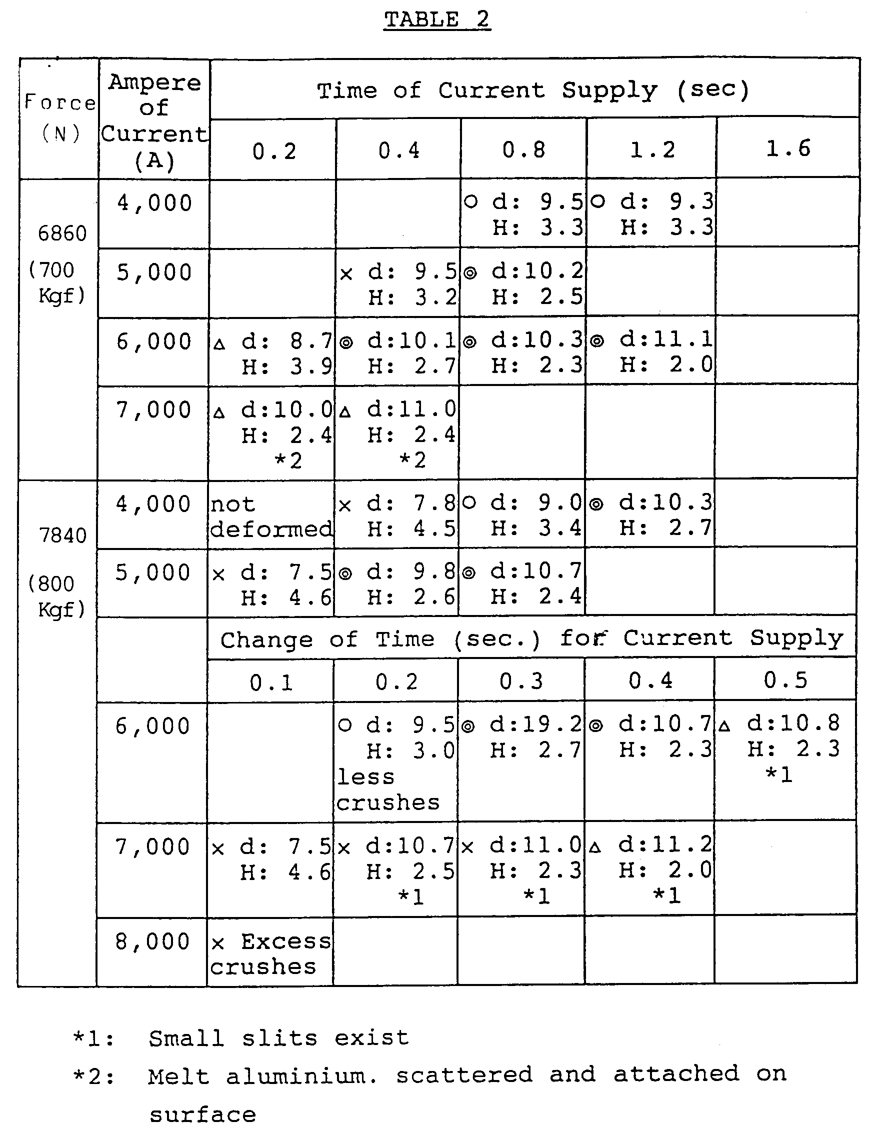

As shown in Tables 1 and 2, it was found that a most favorable caulking result can be obtained if the caulking operation is conducted under the conditions such that a tungsten electrode is used as the electrode, and with respect to the caulking pin 1a made of a magnesium alloy (the diameter thereof being 6.9 mm), the force exerted between said upper and lower electrodes 3 and 4 is 4900-7840 N (500-800 Kgf), i.e., 131-210 N/mm² (13.4-21.4 Kgf/mm²) if represented per a unit area, the current ampere is 4,000-6,000A, i.e., the electric current density is 100-160 A/mm², and the electric power supply time is 0.2-1.6 sec.

As mentioned above, according to the present invention, since at least the electrode that contact the caulking pin of the work is made of tungsten, and the caulking or welding conditions are selected appropriately as mentioned above, it becomes possible to use a magnesium or a magnesium alloy as the material to be worked under a caulking process that has been considered impossible in the prior art. Therefore, the present invention can be effectively applied in various fields of the art, such as a lightening technique in articles of a vehicle.

It should be understood by those skilled in the art that the foregoing description relates to only a preferred embodiment of the disclosed invention, and that various changes and modifications may be made to the invention without departing from the scope thereof, as defined in the claims.

## Claims

1. An electrical caulking method of a work that is made of magnesium or a magnesium alloy and comprises a body (1) and a caulking pin (1a) integrally projected from said body (1), said method comprising:
- a step of holding said work between opposing first and second electrodes (3,4) in such a manner that said first electrode (3) contacts said caulking pin (1a) and said second electrode (4) contacts said body (1),
- a step of supplying an electric current between said first and second electrodes (3,4) and
- a step of exerting a pressure therebetween so as to caulk said caulking pin (1a) into a desired shape;
characterized in that at least said first electrode (3) that contacts said caulking pin (1a) of said work is made of tungsten.

2. A method as set forth in claim 1, further comprises a second work (2) which is to be attached together with to said first work, said method comprising:
- a step of placing said first and second members (1,2) together in such a manner that said caulking pin (1a) is inserted into said caulking pin inserting hole (2a).

3. A method as set forth in any one of claims 1 and 2 wherein an alternating electric current is supplied between said first and second electrodes (3,4).

4. A method as set forth in any one of claims 1 to 3 wherein an electric current density is 100 to 160 A/mm².

5. A method as set forth in any one of claims 1 to 4 wherein a pressure of 127-216 N/mm² (13 to 22 Kgf/mm²) is exerted between said first and second electrodes (3,4).

6. A method as set forth in any one of claims 1 to 5 wherein said second electrode (4) which contacts said body (1) of the work is made of an Cr-Cu alloy.

## Patentansprüche

1. Elektrisches Verstemmverfahren für ein Werkstück, das aus Magnesium oder einer Magnesium-Legierung gemacht ist und einen Körper (1) und einen Stemmstift (1a) umfaßt, der integral aus dem Körper (1) herausragt, wobei das besagte Verfahren umfaßt:
- einen Schritt, bei dem man das Werkstück zwischen einer gegenüberliegenden ersten und zweiten Elektrode (3,4) auf solche Weise hält, daß die erste Elektrode (3) sich mit dem Stemmstift (1a) und die zweite Elektrode (4) sich mit dem Körper (1) in Kontakt befindet,
- einen Schritt, bei dem man einen elektrischen Strom zwischen der ersten und der zweiten Elektrode (3,4) zuführt, und
- einen Schritt, bei dem man dazwischen Druck ausübt, um den Stemmstift (1a) in eine gewünschte Form zu stemmen;
dadurch **gekennzeichnet**,
daß zumindest die erste Elektrode (3), die sich in Kontakt mit dem Stemmstift (1a) des Werkstücks befindet, aus Wolfram gemacht ist.

2. Verfahren gemäß Anspruch 1, das ferner ein zweites Werkstück (2) umfaßt, das zusammen mit dem ersten Werkstück an diesem zu befestigen ist, wobei das besagte Verfahren umfaßt:
- einen Schritt, bei dem man das erste und das zweite Element (1,2) auf solch eine Weise zusammen anordnet, daß der Stemmstift (1a) in das Einführloch (2a) für den Stemmstift eingeführt wird.

3. Verfahren gemäß einem der Ansprüche 1 oder 2, worin ein elektrischer Wechselstrom zwischen der ersten und der zweiten Elektrode (3,4) zugeführt wird.

4. Verfahren gemäß irgendeinem der Ansprüche 1 bis 3, worin die elektrische Stromdichte 100 bis 160 A/mm² beträgt.

5. Verfahren gemäß irgendeinem der Ansprüche 1 bis 4, worin ein Druck von 127 bis 216 N/mm² (13 bis 22 Kgf/mm²) zwischen der ersten und der zweiten Elektrode (3,4) ausgeübt wird.

6. Verfahren gemäß irgendeinem der Ansprüche 1 bis 5, worin die zweite Elektrode (4), die sich mit dem Körper (1) des Werkstücks in Kontakt befindet, aus einer Cr-Cu-Legierung gemacht ist.

## Revendications

1. Procédé de matage électrique d'une pièce qui est formée de magnésium ou d'un alliage de magnésium et qui comprend un corps (1) et une broche à mater (1a) faisant saillie dudit corps (1) avec lequel elle est réalisée d'un seul bloc, ledit procédé comprenant :
- une étape de maintien de ladite pièce entre des première et seconde électrodes opposées (3, 4) d'une manière telle que ladite première électrode (3) est en contact avec ladite broche à mater (1a) et que ladite seconde électrode (4) est en contact avec ledit corps (1),
- une étape de mise en circulation d'un courant électrique entre lesdites première et seconde électrodes (3, 4), et
- une étape d'application d'une pression entre elles afin de mater ladite broche à mater (1a) en une forme souhaitée ;
caractérisé en ce qu'au moins ladite première électrode (3) qui est en contact avec ladite broche à mater (1a) de ladite pièce est réalisée en tungstène.

2. Procédé selon la revendication 1, comprenant en outre une seconde pièce (2) qui est destinée à être fixée avec ladite première pièce, ledit procédé comprenant :
- une étape de mise en place ensemble desdits premier et second éléments (1, 2) d'une manière telle que ladite broche à mater (1a) est introduite dans ledit trou (2a) d'introduction de la broche à mater.

3. Procédé selon l'une des revendications 1 et 2, dans lequel on fait circuler un courant électrique alternatif entre lesdites première et seconde électrodes (3, 4).

4. Procédé selon l'une quelconque des revendications 1 à 3, dans lequel la densité du courant électrique est de 100 à 160 A/mm².

5. Procédé selon l'une quelconque des revendications 1 à 4, dans lequel une pression de 127-216 N/mm² (13 à 22 kgf/mm²) est exercée entre lesdites première et seconde électrodes (3, 4).

6. Procédé selon l'une quelconque des revendications 1 à 5, dans lequel ladite seconde électrode (4) qui est en contact avec ledit corps (1) de la pièce est réalisée en un alliage Cr-Cu.
